# DEMANDE DE BREVET EUROPEEN

(11) **EP 1 666 936 A1**
(43) Date de publication de la demande: **07.06.2006**
(21) Numéro de dépôt: 05110757.1
(22) Date de dépôt: 15.11.2005
(51) Int. Cl.: G02B 6/00

(54) **Dispositif optique à double fonction d'illumination et de formation d'une image figurative**

(30) Priorité: 02.12.2004 EP 04028560
(71) Demandeur: ASULAB S.A., 2074 Marin (CH)
(72) Inventeur: Winkler, Pascal, 2072, Saint-Blaise (CH)
(74) Mandataire: Robert, Vincent

(57) **Abrégé**

Il est décrit un appareil présentant une zone d'affichage, tel un écran à cristaux liquides (4), et comprenant un dispositif optique destiné à former un motif décoratif, sous la forme d'une image figurative. Le dispositif optique de formation d'une image figurative comporte un guide optique (1), au moins partiellement superposé à la zone d'affichage (4) et, présentant deux faces étendues (10, 11) ainsi qu'une face latérale (12). Des extracteurs optiques (20) présentant chacun au moins une surface (21) de réflexion de la lumière sont agencés en un premier groupe dans au moins une des faces étendues (11). Une source lumineuse (8, 8a, 8b, 8c, 8d) est disposée de manière à émettre de la lumière en direction des surfaces de réflexion (21), via la face latérale (12) du guide optique. Ainsi, chacune des surfaces de réflexion est à l'origine de la formation d'un faisceau lumineux réfléchi dans une direction bien définie, l'ensemble des faisceaux lumineux formant une image figurative dans cette direction, qui peut être typiquement choisie comme la normale par rapport au plan moyen du guide optique. Le guide optique selon la présente invention est en outre pourvu d'un second groupe d'extracteurs optiques présentant une position prédéfinie par rapport à la zone d'affichage (4) et destiné à assurer l'illumination de cette dernière, éventuellement en relation avec la même source lumineuse que le premier groupe d'extracteurs optiques.

## Description

### DOMAINE TECHNIQUE

La présente invention concerne un appareil présentant au moins une zone d'affichage et comportant un dispositif optique comprenant un guide optique dont une portion est agencée au moins partiellement en superposition par rapport à la zone d'affichage. Le guide optique présente deux faces étendues et au moins une face latérale, des moyens d'extraction optique étant ménagés dans la région de la portion du guide optique agencée en superposition par rapport à la zone d'affichage. Le dispositif optique comprend en outre au moins une source lumineuse disposée en regard de la face latérale dans une direction prédéfinie pour émettre de la lumière à l'intérieur du guide optique et coopérer avec les moyens d'extraction, pour illuminer au moins partiellement la zone d'affichage.

### ARRIÈRE-PLAN TECHNOLOGIQUE

Des appareils comportant des dispositifs de ce type sont connus de l'art antérieur. A titre d'exemple, le brevet US 6,752,505, délivré le 22 juin 2004 au nom de Solid State Opto Limited, décrit un film transparent utilisé comme guide optique permettant de diffuser de la lumière de manière homogène à partir d'une source lumineuse quasi-ponctuelle. Ce document prévoit de ménager des éléments optiques dans le guide optique, éventuellement de manière aléatoire, pour extraire de la lumière et la diriger vers un affichage du type à cristaux liquides (LCD). L'objet principal de ce document est l'obtention d'une illumination homogène présentant le meilleur rendement possible à partir de la lumière émise par une source de lumière, l'illumination obtenue présentant un bon compromis entre sa clarté et sa douceur, du fait d'une diffusion optimisée. Ce brevet décrit comment la diffusion peut être optimisée du fait de la répartition des éléments optiques d'extraction de la lumière sur toute la surface du guide optique, en fonction des sources de lumière disponibles et de la surface à illuminer.

Un tel système peut être mis en oeuvre pour assurer l'éclairage d'un LCD, soit par l'avant ("frontlight"), soit par l'arrière ("backlight") sans entraîner un accroissement exagéré de l'épaisseur du dispositif d'affichage ainsi formé. Toutefois, le document susmentionné ne prévoit pas d'autre application ou utilisation pour ce type de dispositifs.

### RÉSUMÉ DE L'INVENTION

La présente invention a pour but principal d'améliorer les solutions connues de l'art antérieur en fournissant un dispositif optique, notamment pour un appareil portable, permettant d'une part d'assurer l'illumination d'une zone d'affichage et, d'autre part, d'effectuer l'affichage d'un motif décoratif lumineux, sans augmenter la complexité structurelle et donc le coût de fabrication du dispositif optique correspondant.

Dans ce but, l'invention prévoit notamment un appareil du type mentionné plus haut caractérisé par le fait que le guide optique comporte en outre au moins un premier groupe d'extracteurs optiques ménagés dans l'une des faces étendues. Chacun des extracteurs optiques présente des caractéristiques géométriques prédéfinies, dont au moins une surface d'extraction de lumière. Ce groupe d'extracteurs optiques est destiné à extraire de la lumière hors du guide optique pour former une image figurative dans une direction similaire à la direction suivant laquelle la zone d'affichage est visible. L'image figurative est définie directement en fonction des caractéristiques géométriques des extracteurs optiques, notamment du fait des interactions de la lumière avec les surfaces d'extraction.

Grâce à ces caractéristiques particulières, le guide optique de l'appareil selon la présente invention permet de former une image figurative lumineuse en plus de remplir sa fonction de base d'illumination d'une zone d'affichage de l'appareil. L'image figurative formée peut présenter un simple intérêt ludique, esthétique ou décoratif, ou encore peut être mise à profit pour fournir une information à l'utilisateur de l'appareil.

De manière préférée, les moyens d'extraction optique pour l'illumination de la zone d'affichage sont également des extracteurs optiques comportant chacun au moins une surface d'extraction et arrangés en un second groupe.

Les extracteurs peuvent être réalisés de manière à extraire la lumière hors du guide optique par réfraction ou, préférablement, par réflexion.

Des exemples d'application pour lesquels l'invention présente un intérêt particulier correspondent aux cas selon lesquels l'appareil de la présente invention est un appareil électronique portable, du type montre électronique, téléphone portable ou encore appareil photographique, de tels appareils électroniques étant pourvus avantageusement d'un écran d'affichage du type LCD.

Ainsi, dans ces cas particuliers, la mise en oeuvre de la présente invention permet d'illuminer l'écran LCD, d'une part, et de former une image figurative, d'autre part, en ne prévoyant qu'un seul guide optique et, éventuellement, une seule source lumineuse. Dans le cas d'une montre à affichage exclusivement analogique, la présente invention peut également être mise en oeuvre pour illuminer le cadran.

Dans un mode de réalisation préféré, le premier groupe d'extracteurs optiques permettant de former une image figurative est mis en oeuvre pour afficher une information relative au fonctionnement de l'appareil. Dans le cas d'une montre, on peut prévoir l'affichage d'un symbole en forme de cloche pour indiquer le fonctionnement du mode alarme, par exemple. Dans le cas d'un téléphone ou d'un appareil photographique, on peut prévoir que ces extracteurs optiques sont mis en oeuvre pour effectuer l'indication des fonctions des organes de commande, ces derniers étant réalisés en un matériau optiquement transparent.

On peut avantageusement prévoir un grand nombre de variantes de réalisation de l'appareil susmentionné.

En particulier, on peut prévoir la formation d'une image figurative multicolore par la mise en oeuvre d'une pluralité de groupes ou réseaux d'extracteurs dans le guide optique, chaque groupe d'extracteurs étant associé à sa propre source lumineuse.

D'autre part, on peut également prévoir l'affichage d'animations à une seule couleur ou multicolores, sur la base de la variante ci-dessus, en alimentant les sources lumineuses de manière séquentielle.

Les différents groupes d'extracteurs peuvent être agencés dans des régions différentes du guide optique ou encore être entrelacés dans une même région. On peut prévoir, de manière alternative ou complémentaire, la superposition de deux guides optiques ou plus, chacun des guides optiques portant au moins un groupe d'extracteurs.

D'autres variantes de réalisation seront abordées dans la description détaillée qui suit.

### BRÈVE DESCRIPTION DES DESSINS

D'autres caractéristiques et avantages de la présente invention apparaîtront plus clairement à la lecture de la description détaillée qui suit d'un mode de réalisation particulier, faite en référence aux dessins annexés donnés à titre d'exemples non limitatifs et dans lesquels:
- la figure 1 représente une vue en perspective éclatée et schématique des moyens d'affichage d'une pièce d'horlogerie à affichage analogique selon un premier mode de réalisation préféré de la présente invention;
- la figure 2 représente une vue en coupe des éléments représentés sur la figure 1, et

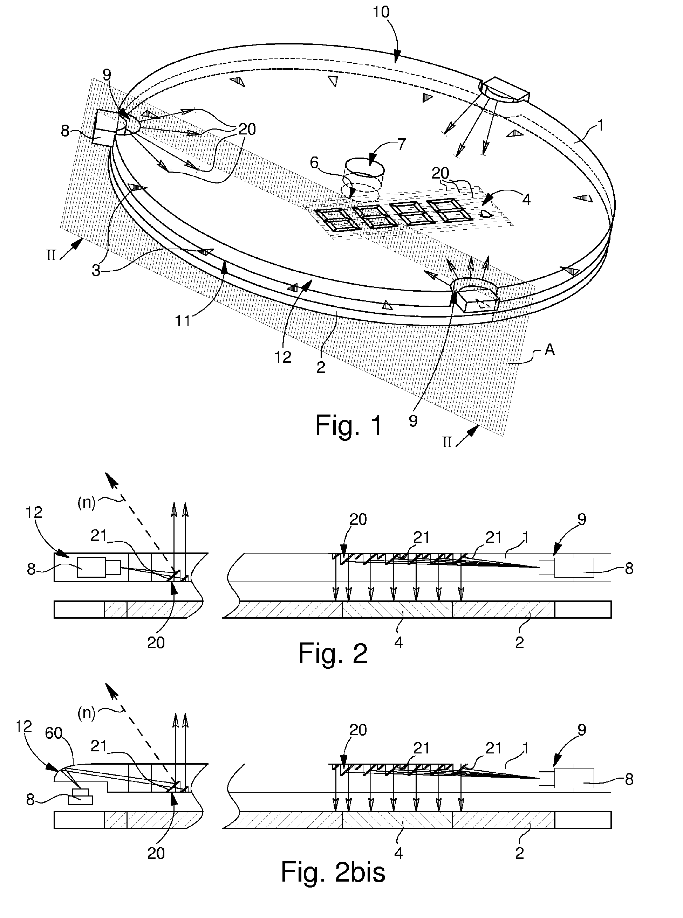

- la figure 2bis est une vue similaire à celle de la figure 2 qui représente une variante de réalisation dans laquelle la source lumineuse est orientée orthogonalement à l'une des faces étendues du guide de lumière ;

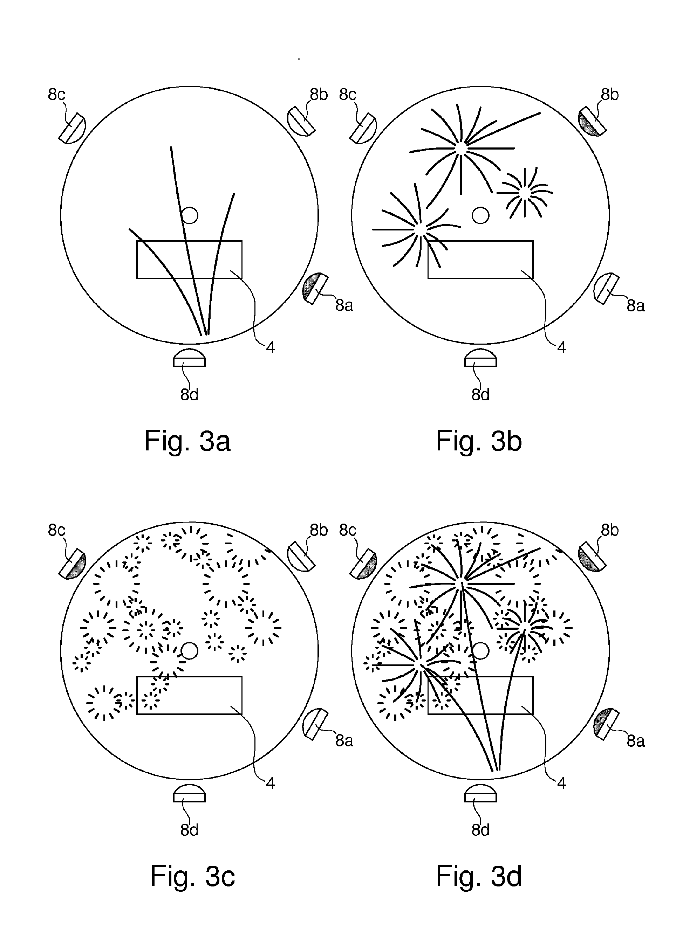

- les figures 3a, 3b, 3c et 3d représentent de manière schématique un exemple d'images formées successivement pour définir une animation.

### DESCRIPTION DÉTAILLÉE

Les figures 1 et 2 représentent des vues schématiques respectivement en perspective et en coupe d'un guide optique 1 selon la présente invention.

Sur la figure 1, on a représenté une disposition possible du guide optique 1 dans une pièce d'horlogerie, à savoir entre le cadran 2 et les aiguilles d'affichage, non représentées dans un souci de simplification. Le cadran 2 est de type conventionnel et est pourvu d'index 3 pour indiquer la position des heures, ainsi que d'une ouverture de forme sensiblement rectangulaire laissant apparaître un écran du type LCD 4.

Le cadran et le guide optique comportent chacun une ouverture centrale 6, respectivement 7, pour permettre le passage des moyens d'entraînement des aiguilles, c'est-à-dire de la roue des heures et de la chaussée, non représentées.

Dans le mode de réalisation représenté sur la figure 1, le guide optique 1 fonctionne en collaboration avec trois diodes 8, identiques ou, éventuellement, de couleurs différentes, dans le but, d'une part, de former une image figurative lumineuse visible au-dessus du cadran 2 de la pièce d'horlogerie et, d'autre part, d'illuminer l'écran LCD 4.

Du point de vue du principe de base, une seule diode 8 suffit pour former, en association avec un réseau d'extracteurs optiques tels que décrits plus loin, une image figurative. En outre, cette même diode unique pourrait suffire à assurer simultanément l'illumination de l'écran LCD 4.

De manière préférée, le couplage optique entre le faisceau lumineux émis par chacune des diodes 8 avec le guide optique 1 est effectué au travers d'une surface d'entrée 9. Dans cet exemple, les surfaces d'entrée 9 présentent chacune sensiblement la forme d'une portion d'enveloppe de cylindre, de manière que les faisceaux émis par les diodes sont réfractés à l'entrée dans le guide optique. Ainsi, l'ouverture angulaire de chacun des faisceaux lumineux se trouve augmentée pour permettre de couvrir la majeure partie de la surface du guide optique.

Le guide optique 1 présente deux faces principales étendues 10 et 11, représentées sur la figure 1 sensiblement en forme de disques à titre illustratif non limitatif, reliées l'une à l'autre par une face latérale 12 en forme générale d'anneau. Les surfaces d'entrée 9 de la lumière sont ménagées dans la surface latérale 12.

Le principe de fonctionnement du système optique décrit en relation avec la figure 1 est schématisé sur la figure 2, sur laquelle les éléments décrits ci-dessus sont montrés dans une vue en coupe transversale, suivant un plan, repéré par la lettre A, coupant deux diodes 8 et deux groupes d'extracteurs optiques. Le plan A contient la droite II-II et coupe les deux faces étendues 10 et 11 en formant un angle droit.

Conformément à la présente invention, le guide optique 1 comporte une pluralité d'extracteurs optiques 20, arrangés en un premier groupe et ménagés sur la face étendue 11 située du côté du cadran 2.

Les extracteurs optiques 20, dont chacun présente au moins une surface de réflexion 21, sont répartis suivant un réseau prédéfini sur la face étendue 11, un tel réseau étant défini pour correspondre à une image figurative bien précise, tel qu'exposé ci-dessous.

La surface de réflexion 21 présente une normale (n) orientée de façon à faire face à la diode 8 correspondante, avec un certain angle prédéfini. Ainsi, une certaine proportion des faisceaux lumineux émis par la diode 8 tombe sur la surface de réflexion 21, soit en incidence directe, soit après une ou plusieurs réflexions préalables sur au moins l'une des faces étendues 10 et 11.

La proportion des faisceaux lumineux qui interagissent avec la surface de réflexion 21 peut être ajustée en fonction de certains paramètres géométriques d'un extracteur donné, en particulier en fonction de la distance séparant la diode 8 de la surface de réflexion 21 et de la hauteur de l'extracteur optique 20 par rapport à l'épaisseur du guide optique 1. L'homme du métier ne rencontrera pas de difficulté particulière pour adapter ces paramètres en fonction de ses besoins.

En ce qui concerne les moyens mis en oeuvre pour assurer l'illumination de l'écran LCD 4, des extracteurs optiques 20 sont également agencés en un second groupe situé au voisinage immédiat de l'écran LCD 4. Dans l'exemple représenté sur les figures 1 et 2, le groupe des extracteurs optiques 20 prévus pour illuminer l'écran 4 est disposé au-dessus de l'écran 4 et s'étend sur une surface sensiblement supérieure à celle occupée par l'écran. Les extracteurs optiques sont régulièrement agencés, leurs surfaces de réflexion 21 respectives étant toutes orientées pour faire face à la diode 8 disposée à 6 heures. L'homme du métier ne rencontrera pas de difficulté particulière pour optimiser le nombre, les dimensions et la position des extracteurs optiques du second groupe pour obtenir une illumination efficace et homogène de l'écran LCD, en fonction des caractéristiques de ce dernier.

D'autre part, en ce qui concerne ce mode de réalisation particulier de la présente invention, tous les extracteurs optiques du premier groupe, c'est-à-dire ceux prévus pour former une image figurative prédéfinie, présentent sensiblement un même angle par rapport à la face étendue 11. Une telle caractéristique a pour conséquence que les faisceaux lumineux tombant sur les surfaces de réflexion 21 sont tous déviés dans une même direction. Ainsi, chaque surface de réflexion 21 du réseau donne lieu à la formation d'un faisceau lumineux réfléchi. L'ensemble des faisceaux lumineux réfléchis forme un réseau de faisceaux lumineux donnant lieu à une image figurative dans une direction donnée.

Dans le cas particulier représenté sur la figure 2, l'angle entre la surface de réflexion 21 et la face étendue 11 est sensiblement de 45 degrés, entraînant la formation d'une image figurative dans une direction sensiblement perpendiculaire à la face étendue. Ainsi, le porteur de la pièce d'horlogerie selon le présent mode de réalisation peut voir une image lumineuse lorsqu'il en regarde le cadran dans une direction sensiblement normale, sous réserve bien entendu que les diodes 8 sont alimentées en énergie électrique.

Bien entendu, l'invention ne se limite pas à la formation d'une image figurative dans une direction perpendiculaire au cadran. On peut par exemple envisager de former l'image figurative dans une direction présentant un angle de l'ordre de 60 degrés par rapport au cadran, en direction de la position 6 heures, pour permettre au porteur de la visualiser sans tourner son avant-bras dans une mesure importante.

De manière générale, la direction de formation de l'image figurative est ajustée par l'angle que forme la surface de réflexion par rapport aux faisceaux lumineux incidents, la normale (n) de la surface de réflexion correspondant à la bissectrice des directions diode - surface de réflexion, d'une part, et surface de réflexion - observateur, d'autre part.

Le guide optique 1 peut être réalisé en tout matériau possédant les qualités requises, dont en particulier la transparence vis-à-vis de la propagation de la lumière, notamment dans le domaine visible. De manière préférée, on pourra réaliser le guide optique en un matériau plastique du type PMMA, par injection, par réplication, ou par tout autre procédé adapté, les avantages de ces solutions résidant principalement dans la facilité des procédés de fabrication correspondants et dans le bas prix de revient du produit obtenu.

D'après l'explication qui précède, on comprend que les surfaces de réflexion 21 constituent un ensemble de pixels permettant de former une image figurative. Par conséquent, plus les surfaces de réflexion sont de petites tailles, plus la résolution et donc la qualité de l'image sont bonnes.

Comme déjà suggéré, il convient de noter que plus la hauteur d'un extracteur optique est importante, plus sa surface efficace est grande et donc, plus la quantité de lumière extraite du guide optique à l'endroit correspondant est importante. Ainsi, il en ressort que l'intensité lumineuse de chacun des faisceaux lumineux réfléchis peut être finement ajustée par le biais des caractéristiques de l'extracteur optique correspondant. Sur la base de cet ajustement, il devient possible de former une image figurative en "niveaux de gris" (dans la couleur de la diode employée) sur la base d'une source lumineuse unique.

En ayant recours aux techniques de fabrication actuelles, il est envisageable de réaliser des extracteurs optiques présentant des dimensions de l'ordre de 10 µm, ce qui les rend difficile à percevoir pour l'utilisateur de l'appareil lorsqu'ils ne sont pas illuminés, de manière avantageuse. En outre, la surface de réflexion 21 peut présenter diverses formes, planes ou incurvées pour moduler la forme du faisceau réfléchi et le rendre légèrement divergent, par exemple.

De manière préférée, les extracteurs optiques appartenant à un même réseau présentent au moins une caractéristique géométrique commune, à savoir que la normale à la surface de réflexion est contenue dans un plan qui est à la fois perpendiculaire au guide optique 1 et à la surface d'entrée 9 correspondante. Cette caractéristique schématisée sur la figure 1 garantit que l'extraction de la lumière est optimale, ce qui est plus avantageux du point de vue de la consommation en énergie électrique de la pièce d'horlogerie dans laquelle le décor lumineux de la présente invention est mis en oeuvre.

Lorsque l'appareil selon la présente invention est mis en oeuvre sous la forme d'une montre électronique, on peut prévoir que les extracteurs optiques du premier groupe sont agencés de telle manière qu'une image figurative symbolisant une fonction de la montre soit affichée. En effet, on peut prévoir, à titre d'exemple non limitatif, qu'en réponse à l'activation d'un organe de commande de la montre, un mode alarme est activé et, que l'heure de l'enclenchement de l'alarme est affichée pendant un certain temps sur l'écran LCD 4. Dans ce cas, les extracteurs optiques peuvent être agencés en un réseau tel que, pendant que l'heure d'alarme est affichée sur l'écran LCD 4, une inscription "AL" est affichée au-dessus d'une région prédéfinie du cadran pour indiquer à l'utilisateur la nature de l'information affichée sur l'écran LCD 4. On peut prévoir, en alternative, que les extracteurs optiques du premier groupe sont agencés de manière à faire apparaître une image figurative symbolisant une cloche.

De même, on pourra prévoir l'affichage de l'inscription "CHR" ou d'un symbole représentant un personnage en train de courir pour indiquer à l'utilisateur que l'écran LCD 4 affiche un temps mesuré, lorsque la montre dispose d'une fonction chronographe.

Lorsque l'appareil selon la présente invention est mis en oeuvre sous la forme d'un téléphone ou d'un appareil photographique, on peut prévoir qu'une face de l'appareil présentant un affichage du type LCD comporte également un certain nombre d'organes de commande. Dans ce cas, tandis que les extracteurs optiques du second groupe sont disposés par rapport à l'affichage LCD de manière à en assurer l'illumination, les extracteurs optiques du premier groupe peuvent être agencés de telle manière qu'ils assurent la formation d'images figuratives prédéfinies au niveau des organes de commande. Dans le cas du téléphone, par exemple, on peut envisager de réaliser ainsi les inscriptions conventionnelles des touches servant à la numérotation des numéros d'appel téléphonique, notamment les chiffres 0 à 9. Il faut alors prévoir que d'éventuels éléments structurels situés entre le guide optique et les touches sont transparents pour ne pas empêcher le passage des faisceaux lumineux réfléchis par les extracteurs optiques. Ces caractéristiques permettent avantageusement au fabricant de téléphones de réaliser un seul modèle de touche de numérotation pour un modèle donné de téléphone, plutôt que de marquer individuellement les touches comme c'est le cas des téléphones courants. Les remarques qui précèdent concernant la mise en oeuvre d'un téléphone s'appliquent bien entendu de façon similaire à la mise en oeuvre d'un appareil photographique.

De manière générale, l'homme du métier pourra mettre en oeuvre un nombre de sources lumineuses correspondant à ses propres besoins. En particulier, on peut prévoir d'utiliser une seule source lumineuse pour illuminer à la fois les extracteurs optiques du premier groupe, pour former une image figurative, et les extracteurs optiques du second groupe, pour illuminer une zone d'affichage, sans sortir du cadre de la présente invention.

La structure représentée sur la figure 1, mettant en oeuvre un guide optique 1 illuminé par trois sources lumineuses permet avantageusement de former une image multicolore.

Dans ce but, on prévoit que les sources lumineuses émettent des radiations lumineuses de couleurs respectives différentes, chacune de ces sources étant associée à son propre réseau d'extracteurs optiques.

Selon une variante de réalisation simple, chacun des trois réseaux d'extracteurs optiques peut être ménagé dans une région du guide optique 1 située à proximité de la diode 8 lui étant associée, tel que schématisé sur la figure 1.

De manière alternative, on peut prévoir que chacun des trois réseaux est étendu sur une partie importante de la surface totale du guide optique, ceux-ci étant éventuellement entrelacés. Un exemple d'image figurative obtenue avec une telle configuration est décrit ci-dessous, en relation avec la description détaillée des figures 3a, 3b, 3c et 3d.

Les figures 3a à 3c représentent de manière schématique l'image figurative formée par chacun de trois réseaux d'extracteurs optiques coopérant avec une source lumineuse donnée.

La pièce d'horlogerie correspondant aux schémas de la figure 3 comporte trois diodes 8, disposées sensiblement en regard des positions 4 heures (référence 8a sur la figure 3), 2 heures (référence 8b) et 10 heures (référence 8c). On a en outre représenté une quatrième diode 8d qui permet d'illuminer l'écran LCD 4 en relation avec le second groupe d'extracteurs optiques, ces derniers n'étant pas visibles sur la figure 3 pour plus de clarté.

Chacune des diodes 8a, 8b et 8c est associée à un réseau d'extracteurs optiques donné. La figure 3a représente l'image figurative formée, telle qu'elle apparaît au porteur de la pièce d'horlogerie selon le présent mode de réalisation, lorsque la diode 8a est alimentée pour émettre de la lumière en direction du réseau qui lui est associé. De même, les figures 3b et 3c représentent les images figuratives respectivement formées lors du fonctionnement des diodes 8b et 8c. La figure 3d représente l'image figurative multicolore formée lorsque les trois diodes 8a, 8b et 8c sont alimentées simultanément.

Sur la base d'une telle structure à trois diodes et trois réseaux d'extracteurs optiques entrelacés, on peut prévoir une pluralité de modes de fonctionnement.

On peut par exemple programmer les circuits électroniques de la montre selon la présente invention de telle manière que les trois diodes 8a, 8b et 8c sont alimentées simultanément en réponse à l'activation d'un organe de commande par l'utilisateur. La fonction correspondante présente un intérêt au-delà du simple apport esthétique, en ce que l'image figurative formée est lumineuse et peut donc permettre au porteur de la montre de repérer la position des aiguilles alors qu'il se trouve dans un environnement sombre.

De manière alternative ou complémentaire, les circuits électroniques de la montre peuvent être programmés pour que les diodes 8a, 8b et 8c soient alimentées de manière séquentielle en réponse à une activation différente de l'organe de commande ou en réponse à l'activation d'un organe de commande supplémentaire. II est bien entendu que la présente invention n'est pas limitée à la nature et aux modes de fonctionnement du ou des organes de commande.

A titre d'exemple, on pourra prévoir que les trois diodes sont alimentées simultanément en réponse à un choc détecté par un accéléromètre agencé dans la montre.

Suivant un mode de fonctionnement de type séquentiel, on obtient l'affichage d'une animation multicolore, à savoir le tir d'un feu d'artifice dans le cas de l'exemple représenté sur les figures 3a à 3d.

Sur la figure 3a, on a schématisé l'affichage de la première image figurative de l'animation, obtenue par la collaboration des faisceaux lumineux émis par la première diode 8a avec un premier réseau d'extracteurs optiques. Le porteur de la montre peut voir une image figurative lumineuse symbolisant la traînée laissée par des fusées au cours d'un feu d'artifice depuis le dessus du cadran.

Sur la figure 3b, on a schématisé l'affichage de la seconde image figurative de l'animation, obtenue par la collaboration des faisceaux lumineux émis par la seconde diode 8b avec un second réseau d'extracteurs optiques. Le porteur de la montre peut voir une image figurative lumineuse symbolisant les explosions principales des fusées tirées dans la première étape du déroulement du feu d'artifice.

Sur la figure 3c, on a schématisé l'affichage de la troisième image figurative de l'animation, obtenue par la collaboration des faisceaux lumineux émis par la troisième diode 8c avec un troisième réseau d'extracteurs optiques. Le porteur de la montre peut voir une image figurative lumineuse symbolisant des explosions secondaires des fusées.

Ainsi, lorsque les trois diodes 8a, 8b et 8c sont alimentées de manière séquentielle, le porteur de la montre peut visualiser le tir d'un feu d'artifice suivi de deux séries d'explosion.

L'homme du métier pourra bien entendu prévoir différentes variantes de l'animation qui vient d'être décrite sans sortir du cadre de la présente invention. On pourra par exemple prévoir que suite à l'affichage de la troisième image figurative de l'animation telle que décrite ci-dessus, les trois diodes 8a, 8b et 8c sont alimentées simultanément pour former l'image complète du feu d'artifice.

II convient de noter que, dans le mode de réalisation représenté sur les figures 3a à 3d, les premier et second groupe d'extracteurs sont partiellement superposés, ce qui rendu visible par certaines parties des motifs qui recouvrent partiellement l'écran LCD 4. Dans ce cas, l'homme du métier ne rencontrera pas de difficulté particulière à agencer chacun des extracteurs optiques d'un groupe de telle manière que les faisceaux lumineux qu'il réfléchit ne soient pas perturbés par un ou plusieurs extracteurs optiques de l'autre groupe.

Par ailleurs, sur la base de la description qui précède, on peut prévoir un nombre important de variantes de réalisation de la pièce d'horlogerie à affichage d'un motif lumineux selon la présente invention.

A titre d'exemple, on peut agencer deux réseaux d'extracteurs optiques sur un même guide d'onde, pour lesquels les directions de réflexion des faisceaux lumineux sont différentes. Dans ce cas, on obtient la formation de deux images figuratives différentes, visibles depuis deux positions différentes. Suivant une variante de réalisation, on peut prévoir que les deux directions de réflexion présentent un angle entre-elles tel que les deux images formées constituent un stéréogramme lorsque l'observateur place ses yeux à une distance donnée au-dessus du guide optique.

La description qui précède correspond à des modes de réalisation préférés de l'invention et ne saurait en aucun cas être considérée comme limitative, en ce qui concerne plus particulièrement la nature et la structure décrites pour l'appareil, notamment la présence d'un écran LCD, la nature et le nombre des organes de commande utilisés ou encore l'emplacement des diodes. De même, l'invention n'est pas limitée aux modes de fonctionnements décrits et moyens retenus pour leurs activations respectives dans la mesure où ces paramètres sont modifiables par une programmation adéquate du circuit contrôleur. L'homme du métier ne rencontrera pas de difficulté particulière pour adapter le fonctionnement de l'appareil selon la présente invention à ses propres besoins.

Selon une variante de réalisation représentée sur la figure 2bis, pour chaque source lumineuse on utilise une diode 8 qui est orientée orthogonalement à une face étendue 11 du guide optique 1, c'est-à-dire qu'elle émet des rayons lumineux dirigés globalement verticalement vers le haut, alors que dans le mode de réalisation représenté sur la figure 2, la diode 8 émet des rayons lumineux dirigés globalement orthogonalement à la face latérale 12.

La diode 8 est ici agencée sous le guide optique 1, toujours au voisinage de la face latérale 12. La surface d'entrée 9 est ici parallèle aux faces étendues 10, 11. De préférence, la portion périphérique 60 de la face étendue supérieure 10 du guide optique 1 est incurvée vers la face étendue inférieure 11 de manière que les rayons lumineux, qui sont émis par la diode 8 en direction de la périphérie du guide optique 1, puissent se réfléchir totalement sur la portion périphérique 60 et se diriger vers les surfaces de réflexion 20 associées à la diode 8.

Cette variante de réalisation permet d'utiliser des diodes 8 dites à émission vers le haut, ou "top emitting diode", relativement à la face de la plaque à circuits imprimés sur laquelle elles sont montées, par opposition aux diodes dites à émission latérale, ou "side emitting diode".

On peut mettre en oeuvre de nombreuses variantes sans sortir du cadre de la présente invention, tel que prévoir de ne pas agencer de cadran dans la montre, le guide optique en assurant directement la fonction et, les rouages d'entraînement des aiguilles étant adaptés pour présenter une esthétique attractive pour le porteur de la montre. Par ailleurs, le guide optique peut bien entendu être agencé sous la zone d'affichage et assurer l'illumination de cette dernière par transmission.

D'autre part, l'invention n'est pas limitée à la mise en oeuvre d'extracteurs optiques du type réflectif. On notera en particulier que des extracteurs optiques du type par réfraction sont également adaptés à la mise en oeuvre d'un dispositif d'illumination d'une zone d'affichage. Toutefois, en ce qui concerne la formation d'images figuratives, les extracteurs optiques du type par réflexion sont préférés car ils offrent une plus grande souplesse de réalisation, en particulier du point de vue de l'angle de sortie du guide optique des faisceaux lumineux.

On pourra également prévoir des caractéristiques supplémentaires sans sortir du cadre de la présente invention, comme par exemple recouvrir la face latérale du guide optique d'un revêtement réfléchissant, en dehors des surfaces d'entrée, pour limiter les pertes de lumière dues à des faisceaux lumineux parvenant éventuellement jusqu'à la face latérale et risquant de sortir du guide optique.

## Revendications

1. Appareil présentant au moins une zone d'affichage (4) et comportant un dispositif optique comprenant un guide optique (1) dont une portion est agencée au moins partiellement en superposition par rapport à ladite zone d'affichage (4), ledit guide optique présentant deux faces étendues (10, 11) et au moins une face latérale (12), ladite portion du guide optique comportant des moyens d'extraction optique (20), ledit dispositif optique comprenant en outre au moins une source lumineuse (8, 8a, 8b, 8c, 8d) disposée au voisinage de ladite face latérale (12) et orientée dans une direction prédéfinie pour émettre de la lumière à l'intérieur dudit guide optique et coopérer avec lesdits moyens d'extraction (20) pour illuminer au moins partiellement ladite zone d'affichage (4), **caractérisé en ce que** ledit guide optique comporte en outre au moins un premier groupe d'extracteurs optiques ménagés dans l'une desdites faces étendues et présentant chacun des caractéristiques géométriques prédéfinies dont au moins une surface d'extraction (21) de lumière, ledit groupe d'extracteurs optiques étant destiné à extraire de la lumière hors dudit guide optique pour former une image figurative dans une direction similaire à la direction suivant laquelle ladite zone d'affichage est visible, ladite image figurative étant définie directement en fonction desdites caractéristiques géométriques, par interaction de la lumière sur lesdites surfaces d'extraction (21).

2. Appareil selon la revendication 1, **caractérisé en ce que** la source lumineuse (8, 8a, 8b, 8c, 8d) est disposée en regard de la face latérale (12) dans une direction prédéfinie pour émettre de la lumière à l'intérieur du guide optique et coopérer avec les moyens d'extraction (20) pour illuminer au moins partiellement la zone d'affichage (4).

3. Appareil selon la revendication 1, **caractérisé en ce que** la source lumineuse (8) est orientée dans une direction orthogonale à l'une des faces étendues (10,11).

4. Appareil selon l'une quelconque des revendications précédentes, **caractérisé en ce que** lesdits moyens d'extraction optique sont également des extracteurs optiques (20) présentant chacun au moins une surface (21) d'extraction de la lumière et sont arrangés en un second groupe.

5. Appareil selon la revendication 4, **caractérisé en ce que** lesdits extracteurs optiques (20) pour former ladite image figurative sont agencés sur celle (11) desdites faces étendues qui est opposée à la face étendue au travers de laquelle la lumière est extraite pour former ladite image figurative, lesdites surfaces d'extraction dudit premier groupe étant des surfaces de réflexion.

6. Appareil selon la revendication 5, **caractérisé en ce que** lesdits extracteurs optiques (20) dudit second groupe sont agencés sur celle (10) desdites faces étendues qui est la plus éloignée de ladite zone d'affichage (4), chacun desdits extracteurs optiques dudit second groupe présentant également au moins une surface de réflexion (21).

7. Appareil selon l'une quelconque des revendications 4 à 6, **caractérisé en ce que** lesdits premier et second groupe d'extracteurs optiques sont agencés dans des régions distinctes dudit guide optique.

8. Appareil selon l'une quelconque des revendications 4 à 6, **caractérisé en ce que** lesdits premier et second groupe d'extracteurs optiques sont agencés dans des régions superposées dudit guide optique.

9. Appareil selon l'une quelconque des revendications 4 à 8, **caractérisé en ce que** ledit dispositif optique comporte une source lumineuse supplémentaire dirigée dans ledit guide optique de manière à interagir avec ledit premier groupe d'extracteurs optiques dont les surfaces d'extraction optique présentent des orientations différentes de celles desdites surfaces d'extraction optique dudit second groupe d'extracteurs optiques.

10. Appareil selon l'une quelconque des revendications précédentes, **caractérisé en ce que** ladite zone d'affichage est un écran (4) d'affichage à cristaux liquides.

11. Appareil selon l'une quelconque des revendications précédentes prise en combinaison avec la revendication 4, ledit appareil étant un téléphone portable comprenant notamment un affichage et des organes de commande pour la numérotation au moins partiellement transparents et disposés sur une face dudit téléphone, ledit affichage étant illuminé par lesdits extracteurs optiques dudit second groupe tandis que des inscriptions portées par lesdits organes de commande sont formées par réflexion de lumière sur lesdits extracteurs optiques dudit premier groupe.

12. Appareil selon l'une quelconque des revendications 1 à 10 prise en combinaison avec la revendication 4, ledit appareil étant une montre électronique comprenant notamment un cadran (2) au moins partiellement illuminé par ledit second groupe d'extracteurs optiques tandis que ledit premier groupe d'extracteurs optiques est mis en oeuvre pour effectuer l'affichage d'une image figurative prédéfinie dans une région dudit cadran.

13. Montre électronique selon la revendication 12, **caractérisée en ce que** ledit cadran (2) présente au moins une portion dédiée à un affichage (4) du type à cristaux liquides, ledit affichage à cristaux liquides étant illuminé par ledit second groupe d'extracteurs optiques.

14. Montre électronique selon la revendication 12 ou 13, **caractérisée en ce que** ladite image figurative symbolise un mode de fonctionnement particulier de ladite montre électronique, lesdits extracteurs optiques dudit premier groupe étant illuminés lorsque ledit mode de fonctionnement est activé.
